# EUROPEAN PATENT APPLICATION

(11) **EP 4 852 195 A1**
(43) Date of publication of application: **09.12.2026**
(21) Application number: 25880029.1
(22) Date of filing: 15.09.2025
(51) Int. Cl.: H01M 50/375, H01M 50/342, H01M 50/251

(54) **BATTERY CONTAINER**

(30) Priority: 18.10.2024 KR 20240143206
(71) Applicant: LG Energy Solution, Ltd., Seoul 07335 (KR)
(72) Inventor: YU, Sang-Hyun, Daejeon 34122 (KR)
(74) Representative: Plasseraud IP
(86) International application number: PCT/KR2025/014330
(87) International publication number: WO 2026/084268

(57) **Abstract**

Disclosed is a battery container. A battery container includes a case providing a space therein and having a locking assembly; a battery cell located within the case; and a door coupled to the case and having a first hooking portion, and the locking assembly includes a second hooking portion coupled to the first hooking portion; a locking portion coupled to the second hooking portion and configured to fix the second hooking portion; an elastic member configured to provide a restoring force to the locking portion; and a trigger member configured to support the locking portion and restrict movement of the locking portion.

## Description

### TECHNICAL FIELD

The present disclosure relates to a battery container.

This application is based on and claims priority from Korean Patent Application No. 10-2024-0143206, filed on October 18, 2024, with the Korean Intellectual Property Office, the disclosure of which is incorporated herein in its entirety by reference.

### BACKGROUND ART

Currently commercialized secondary batteries include nickel cadmium batteries, nickel hydrogen batteries, nickel zinc batteries, lithium secondary batteries, and the like, and among these, lithium secondary batteries are in the spotlight because they have advantages of free charging and discharging due to almost no memory effect compared to nickel-based secondary batteries, very low self-discharge rate, and high energy density.

Recently, as issues such as power shortage or eco-friendly energy have come to the fore, energy storage systems (ESSs) for storing generated power are attracting more attention. For example, a smart grid system has been proposed as one of the ways for adjusting the supply and demand of power. The amount of power consumed by consumers is not always constant and may fluctuate frequently. As a representative example, power consumption increases sharply due to the use of cooling systems in the afternoon during summer, and then decreases sharply at night. As such, in terms of power consumption, power consumption is not constant and may fluctuate frequently, but in terms of power supply, it is practically difficult to match such power consumption even if the amount of power produced is adjusted to some extent. Therefore, such an imbalance between the supply and demand of power may cause power oversupply or power shortage, and a smart grid system may flexibly store and adjust power to solve this problem. The smart grid system can be said to be a concept that stores power at times or regions where surplus power occurs, and supplies the stored power to times or regions where power shortage occurs. One of the key components for building this smart grid system can be said to be energy storage systems for storing power. Additionally, as electric vehicles have been commercialized in earnest recently, energy storage systems may also be utilized in facilities for charging electric vehicles, such as charging stations.

Such energy storage systems may include a plurality of battery containers. And, when a thermal event occurs, it is required to reduce the explosion pressure to prevent the battery container from exploding. To meet such requirements, there is an increasing need to discharge flammable or explosive gases inside the battery container to the outside.

### DISCLOSURE

### Technical Problem

The present disclosure is designed to solve the above-described problems and other problems.

The present disclosure is also directed to providing a battery container capable of discharging gas inside the case to the outside when a thermal event occurs.

The present disclosure is also directed to providing a battery container capable of maintaining a sealed state of the case while no thermal event occurs.

The present disclosure is also directed to providing a battery container with improved thermal safety.

### Technical Solution

In one aspect of the present disclosure, there is provided a battery container comprising: a case providing a space therein and having a locking assembly; a battery cell located within the case; and a door coupled to the case and having a first hooking portion, wherein the locking assembly includes: a second hooking portion coupled to the first hooking portion; a locking portion coupled to the second hooking portion and configured to fix the second hooking portion; an elastic member configured to provide a restoring force to the locking portion; and a trigger member configured to support the locking portion and restrict movement of the locking portion.

In addition, the trigger member may be configured to be damaged when a thermal event occurs.

In addition, the trigger member may include a glass bulb.

In addition, the trigger member may include a melting member.

In addition, the trigger member may be provided in plurality.

In addition, the locking assembly may further include a protrusion formed on the second hooking portion, and the locking portion may have a fixing hole into which the protrusion is inserted.

In addition, the protrusion may be separated from the fixing hole when the trigger member is damaged.

In addition, the door may include a first rotary shaft rotatably coupled with the first hooking portion, and the locking assembly may further include a second rotary shaft rotatably coupled with the second hooking portion.

In addition, the battery container may further comprise a first torsion spring coupled to the first rotary shaft and configured to provide a restoring force to the first hooking portion; and a second torsion spring coupled to the second rotary shaft and configured to provide a restoring force to the second hooking portion.

In addition, a rotation direction in which the first torsion spring provides a restoring force and a rotation direction in which the second torsion spring provides a restoring force may be opposite to each other.

In addition, the locking assembly may further include an opener extending from the second hooking portion, and the opener may push the first hooking portion as the second hooking portion rotates.

In addition, the door may further include a handle extending from the first hooking portion.

A container system according to one aspect of the present disclosure includes the battery container of the present disclosure.

An energy storage system according to one aspect of the present disclosure includes the battery container of the present disclosure.

### Advantageous Effects

According to at least one of the embodiments of the present disclosure, gases inside the case may be discharged to the outside when a thermal event occurs.

According to at least one of the embodiments of the present disclosure, a sealed state of the case may be maintained while no thermal event occurs.

According to at least one of the embodiments of the present disclosure, a battery container with improved thermal safety may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery container according to an embodiment of the present disclosure.
FIG. 2 is a drawing showing that a door of the battery container of FIG. 1 is opened.
FIG. 3 is an enlarged view showing the door of FIG. 2.
FIG. 4 is an enlarged view showing the interior of the battery container of FIG. 2.
FIG. 5 is a drawing showing a locking assembly of the battery container of FIG. 2.
FIG. 6 is an enlarged view showing the portion C of FIG. 5.
FIG. 7 is a drawing showing the change in FIG. 6 when an internal temperature of the battery container rises.
FIG. 8 is a drawing showing a modified embodiment of FIG. 6.
FIG. 9 is a cross-sectional view taken along the line B-B' of FIG. 5.
FIG. 10 is a drawing showing the change in FIG. 9 when an internal temperature of the battery container rises.
FIG. 11 is a cross-sectional view taken along the line A-A' of FIG. 1.
FIGS. 12 to 16 are drawings showing the change in FIG. 11 when an internal temperature of the battery container rises.
FIG. 17 is a drawing showing that the door is opened when an internal temperature of the battery container rises.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

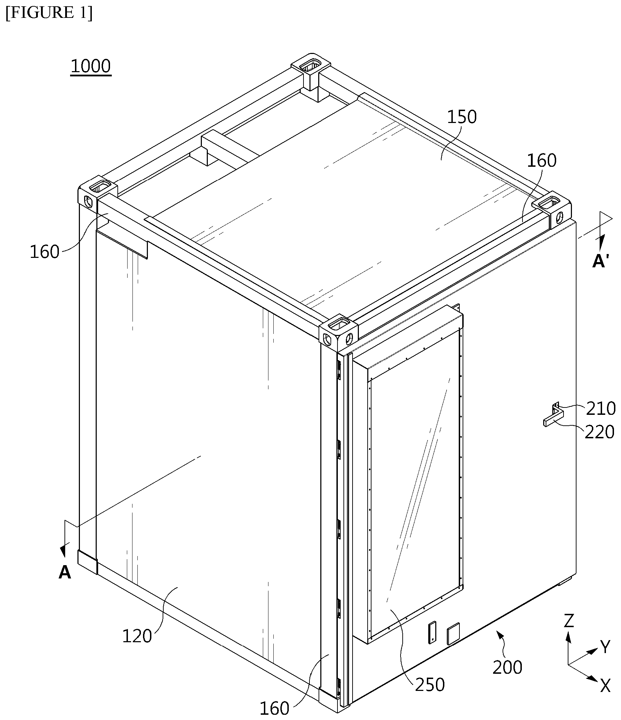

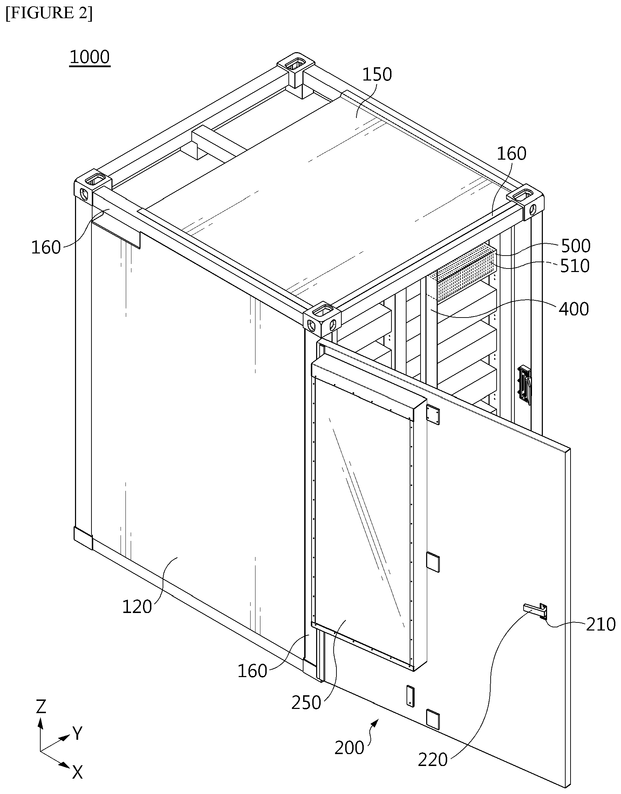

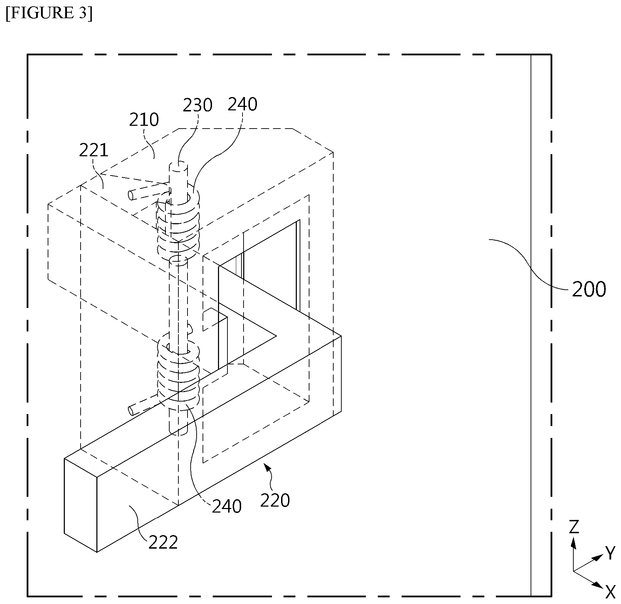

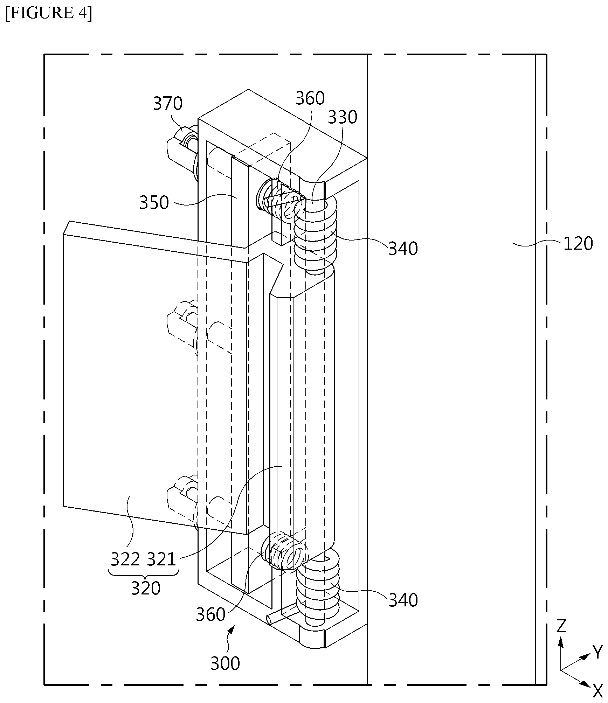

FIG. 1 is a drawing showing a battery container 1000 according to an embodiment of the present disclosure. FIG. 2 is a drawing showing that a door 200 of the battery container 1000 of FIG. 1 is opened. FIG. 3 is an enlarged view showing the door 200 of FIG. 2. FIG. 4 is an enlarged view showing the interior of the battery container 1000 of FIG. 2.

Referring to FIGS. 1 to 4, the battery container 1000 may include a case 100. The case 100 may provide a space therein. The case 100 may form the outer appearance of the battery container 1000.

The battery container 1000 may include a battery cell 510. The battery cell 510 may refer to a secondary battery. In particular, the battery cell 510 may be a pouch-type secondary battery. However, the shape of the battery cell 510 is not limited to a pouch shape, and the battery cell 510 may have various shapes such as a cylindrical shape or a rectangular parallelepiped shape. The battery cell 510 may be provided in plurality. The battery cell 510 may be accommodated inside the case 100.

The battery container 1000 may include a door 200. The door 200 may form the outer appearance of the battery container 1000. The door 200 may be arranged at the front surface of the case 100. The door 200 may be installed, coupled, or fastened to the case 100. The door 200 may open and close the interior of the case 100. The door 200 may include a first hooking portion 221.

The battery container 1000 may include a locking assembly 300. The case 100 may have the locking assembly 300. The locking assembly 300 may include a second hooking portion 321 coupled with the first hooking portion 221. The first hooking portion 221 and the second hooking portion 321 may be hook-coupled. The first hooking portion 221 and the second hooking portion 321 may be configured to be repeatedly coupled or uncoupled.

The locking assembly 300 may include a locking portion 350. The locking portion 350 may be coupled, fastened, fixed, or installed to the second hooking portion 321. The locking portion 350 may limit movement of the second hooking portion 321. The locking portion 350 may limit rotation of the second hooking portion 321.

The locking assembly 300 may include an elastic member 360. The elastic member 360 may provide a restoring force to the locking portion 350. For example, the elastic member 360 may be a coil spring. The elastic member 360 may push the locking portion 350 away from the second hooking portion 321. The elastic member 360 may support the locking portion 350. The elastic member 360 may be provided in plurality.

The locking assembly 300 may include a trigger member 370. The trigger member 370 may support the locking portion 350. The trigger member 370 may limit the movement of the locking portion 350. The trigger member 370 may function as a stopper that limits the movement of the locking portion 350. The locking portion 350 may be located between the elastic member 360 and the trigger member 370. One end of the locking portion 350 may be supported by the trigger member 370, and the other end of the locking portion 350 may be supported by the elastic member 360.

The trigger member 370 may release the state of supporting the locking portion 350. When the internal temperature of the battery container 1000 rises, the trigger member 370 may release the support state of the locking portion 350. When a thermal event occurs inside the battery container 1000, the trigger member 370 may release the support state of the locking portion 350. As the support state of the trigger member 370 is released, the locking portion 350 may move by the restoring force of the elastic member 360. As a result, the coupling of the first hooking portion 221 and the second hooking portion 321 may be released. Also, the door 200 may be opened. As the door 200 is opened, the gas inside the case 100 may be discharged, and the temperature or pressure inside the case 100 may be reduced.

Referring to FIGS. 1 to 4, the door 200 may include a handle 222. The door 200 may include a first part 220. The first part 220 may be configured to be rotatable. The first part 220 may include a first hooking portion 221. The first part 220 may include a handle 222. The first hooking portion 221 and the first part 220 may be formed integrally. The handle 222 may extend from the first hooking portion 221. The handle 222 may be exposed to the outside.

The user may release the coupling between the first hooking portion 221 and the second hooking portion 321 by rotating the handle 222. The user may open the door 200 by pulling the handle 222.

Referring to FIGS. 1 to 4, the case 100 may include a frame 160. The frame 160 may form the outer appearance of battery container 1000. The frame 160 may include a plurality of beams or a plurality of bars. The frame 160 may have a rectangular parallelepiped shape.

The case 100 may include a base panel 110. The base panel 110 may form the outer appearance of the battery container 1000. The base panel 110 may be coupled, fastened, fixed, installed, or attached to the frame 160. The base panel 110 may form the bottom of the case 100.

The case 100 may include a side panel 120. The side panel 120 may form the outer appearance of the battery container 1000. The side panel 120 may be coupled, fastened, fixed, installed, or attached to the frame 160. The side panel 120 may be provided in plurality. For example, the side panel 120 may be provided in three pieces. The side panel 120 may form both side surfaces of the case 100. The side panel 120 may form the rear surface of the case 100.

The case 100 may include a top panel 150. The top panel 150 may form the outer appearance of the battery container 1000. The top panel 150 may be coupled, fastened, fixed, installed, or attached to the frame 160. The top panel 150 may form the upper surface of the case 100.

The door 200 may form the front surface of the battery container 1000. The door 200 may include a HVAC 250. The HVAC 250 may control the temperature inside the case 100. The HVAC 250 may increase or decrease the temperature inside the case 100. The HVAC 250 may ventilate the air inside the case 100. The HVAC 250 may filter dust inside the case 100. The HVAC 250 may control the humidity inside the case 100.

The door 200 may include a first housing 210. The first part 220 may be installed inside the first housing 210. The first rotary shaft 230 may be installed in the first housing 210. The first rotary shaft 230 may extend along the upper and lower direction or the Z-axis direction. The first rotary shaft 230 may pass through the first part 220. The first part 220 may be installed rotatably with respect to the first rotary shaft 230. The first hooking portion 221 may be located at the inner side of the door 200. The handle 222 may be located at the outer side of the door 200.

The door 200 may include a first torsion spring 240. The first torsion spring 240 may be coupled to the first rotary shaft 230. The first torsion spring 240 may be provided in plurality. The first torsion spring 240 may provide a restoring force to the first part 220. For example, the first torsion spring 240 may provide a restoring force in a clockwise direction with respect to the rotation of the first part 220.

The battery container 1000 may include a battery pack 500 therein. The battery pack 500 may include a plurality of battery cells 510. The battery pack 500 may be provided in plurality.

A rack frame 400 may be provided inside the case 100. The rack frame 400 may accommodate a plurality of battery packs 500. The plurality of battery packs 500 may be installed, fastened, coupled, or fixed to the rack frame 400. For example, the plurality of battery packs 500 may be arranged along the upper and lower direction or the Z-axis direction. The plurality of battery packs 500 may be arranged along the right and left direction or the Y-axis direction. The plurality of battery packs 500 may be arranged along the front and rear direction or the X-axis direction. The battery pack 500 may also be referred to as a battery module 500, a battery assembly 500, or a battery stack 500.

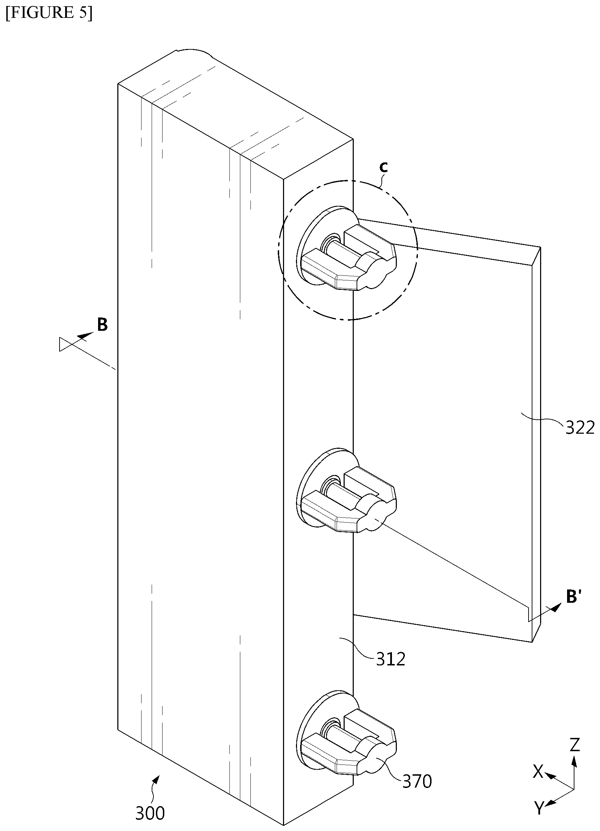

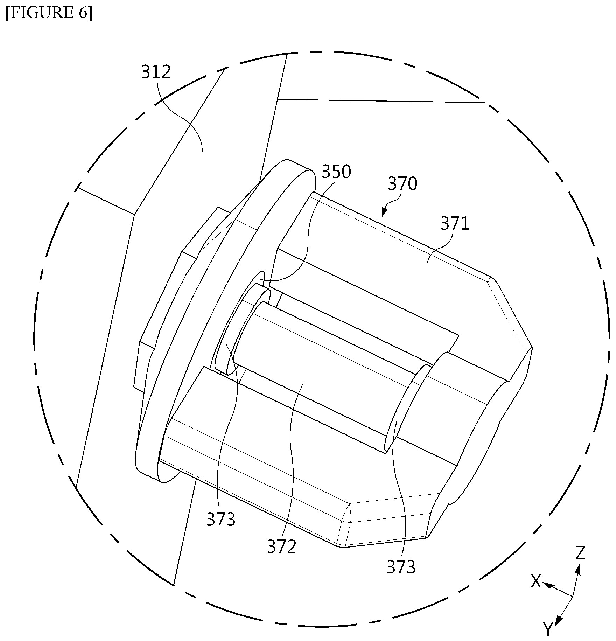

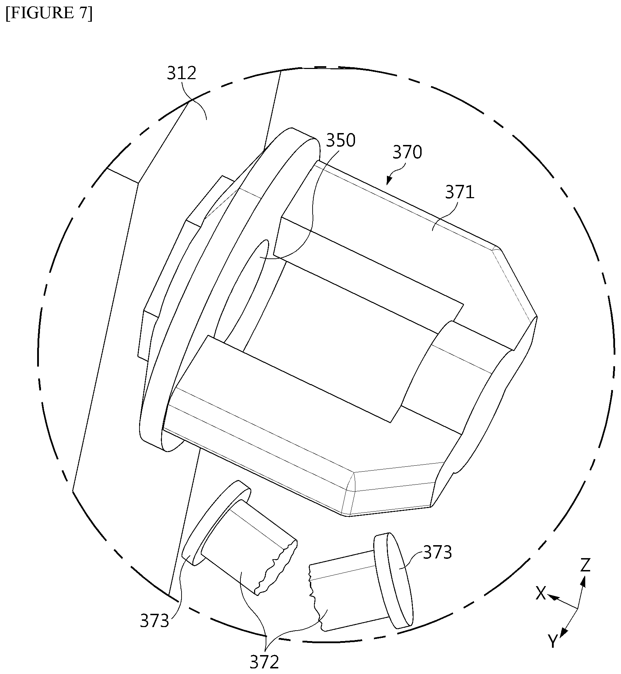

FIG. 5 is a drawing showing a locking assembly 300 of the battery container 1000 of FIG. 2. FIG. 6 is an enlarged view showing the portion C of FIG. 5. FIG. 7 is a drawing showing the change in FIG. 6 when an internal temperature of the battery container 1000 rises.

Referring to FIGS. 4 to 7, the locking assembly 300 may be installed inside the case 100. The locking assembly 300 may be installed at the inner surface of the side panel 120. For example, the locking assembly 300 may be installed at the inner surface of the right side panel 120. The locking assembly 300 may be installed at the inner side of the frame 160.

The locking assembly 300 may include a second housing 310. The second housing 310 may provide a space therein. A second part 320 may be installed in the second housing 310. The second part 320 may include a second hooking portion 321.

The second rotary shaft 330 may be installed in the second housing 310. The second rotary shaft 330 may extend along the upper and lower direction or the Z-axis direction. The second rotary shaft 330 may pass through the second part 320. The second part 320 may be installed rotatably with respect to the second rotary shaft 330.

The locking assembly 300 may include a second torsion spring 340. The second torsion spring 340 may be coupled to the second rotary shaft 330. The second torsion spring 340 may be provided in plurality. The second torsion spring 340 may provide a restoring force to the second part 320. For example, the second torsion spring 340 may provide a restoring force in a counterclockwise direction with respect to the rotation of the second part 320.

The second housing 310 may include an inner wall 311 located at the rear of the second rotary shaft 330. A locking portion 350 may be located at the rear of the inner wall 311. The locking portion 350 may be located between the rear wall 312 and the inner wall 311. An elastic member 360 may be located between the locking portion 350 and the inner wall 311. For example, the elastic member 360 may be a coil spring. The elastic member 360 may be provided in plurality. The elastic member 360 may provide a restoring force to the locking portion 350. The elastic member 360 may provide a restoring force that pushes the locking portion 350 rearward. The locking portion 350 may fix the second part 320. The locking portion 350 may fix the second part 320 so as not to rotate.

The locking assembly 300 may include a trigger member 370 provided in the second housing 310. The trigger member 370 may be provided to the rear wall 312 of the second housing 310. The trigger member 370 may include a holder 371. The holder 371 may protrude from the rear wall 312. The trigger member 370 may include a glass bulb 372. The glass bulb 372 may be located inside the holder 371. The glass bulb 372 may support the locking portion 350. The locking portion 350 may be located between the glass bulb 372 and the elastic member 360. The glass bulb 372 and the elastic member 360 may be balanced. The locking portion 350 may be fixed between the glass bulb 372 and the elastic member 360.

The trigger member 370 may be configured to be damaged when a thermal event occurs. When the trigger member 370 is damaged, the trigger member 370 may not be able to support the locking portion 350. When the trigger member 370 is damaged, the locking portion 350 may move rearward or along the -X-axis direction by the elastic member 360. As the locking portion 350 moves, the second part 320 may be released from fixation. As the locking portion 350 moves, the second part 320 may rotate.

The glass bulb 372 may be configured to break at a specific temperature or above. For example, the glass bulb 372 may contain liquid therein, and when the temperature inside the case 100 increases, the volume of the liquid may expand, thereby breaking the glass bulb 372. The glass bulb 372 may break and detach from the holder 371. The broken glass bulb 372 may fall down due to gravity. As the glass bulb 372 is damaged, the glass bulb 372 may not be able to support the locking portion 350. As the glass bulb 372 is damaged, the locking portion 350 may move backward or along the -X-axis direction by the elastic member 360. As the locking portion 350 moves, the fixation of the second part 320 may be released. As the locking portion 350 moves, the second part 320 may rotate.

The trigger member 370 may be provided in plurality. The holder 371 may be provided in plurality. The glass bulb 372 may be provided in plurality so as to correspond to the holder 371 in one-to-one relationship. The locking portion 350 may be moved by the elastic member 360 only when all the trigger members 370 are damaged. The locking portion 350 may be moved by the elastic member 360 only when all the glass bulbs 372 are broken.

Since the trigger member 370 is provided in plurality, the movement of the locking portion 350 may be performed accurately. Even if the temperature inside the case 100 does not rise, some of the trigger members 370 may be damaged by vibration or impact applied to the battery container 1000. For example, the glass bulb 372 may be damaged by the impact of a user who manually opens and closes the door 200. However, since the trigger member 370 is provided in plurality, the locking portion 350 may not move even if some of the trigger members 370 are damaged. Since the trigger member 370 is provided in plurality, the locking portion 350 may be moved when the temperature inside the case 100 rises.

Since the trigger member 370 is provided in plurality, vibrations or shocks applied to each glass bulb 372 may be dispersed. This prevents the glass bulb 372 from being damaged by vibrations or shocks.

The trigger member 370 may include a pad 373. The pad 373 may be located at the front end of the glass bulb 372. The pad 373 may be located between the glass bulb 372 and the locking portion 350. The pad 373 may be attached, coupled, or fixed to the front end of the glass bulb 372. The pad 373 may also be attached, coupled, or fixed to the rear end of the locking portion 350.

The pad 373 may be located at the rear end of the glass bulb 372. The pad 373 may be located between the glass bulb 372 and the holder 371. The pad 373 may be attached, coupled, or fixed to the rear end of the glass bulb 372. The pad 373 may also be attached, coupled, or fixed to the holder 371. The pad 373 may contain an elastic material. For example, the pad 373 may contain a rubber material. The pad 373 may absorb vibration or shock applied to the battery container 1000. The pad 373 may prevent the glass bulb 372 from being damaged by vibration or shock.

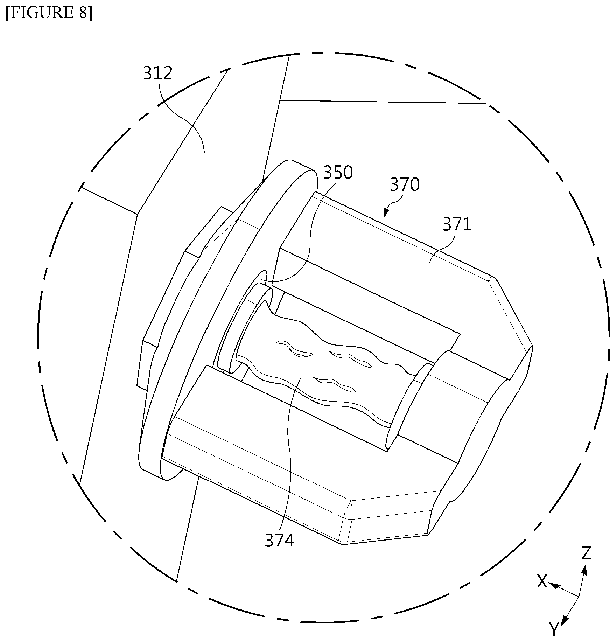

FIG. 8 is a drawing showing a modified embodiment of FIG. 6. Referring to FIG. 8, the trigger member 370 may include a melting member 374. The melting member 374 may contain a metallic material that may melt at a low temperature. For example, the melting member 374 may be a fusible link.

The melting member 374 may be located inside the holder 371. The melting member 374 may support the locking portion 350. The locking portion 350 may be located between the melting member 374 and the elastic member 360. The melting member 374 and the elastic member 360 may be in equilibrium. The locking portion 350 may be fixed between the melting member 374 and the elastic member 360.

The melting member 374 may be configured to melt at a specific temperature or above. As the melting member 374 melts, the melting member 374 may not support the locking portion 350. As the melting member 374 melts, the locking portion 350 may move rearward or along the -X-axis direction by the elastic member 360. As the locking portion 350 moves, the second part 320 may be released from fixation. As the locking portion 350 moves, the second part 320 may be rotated.

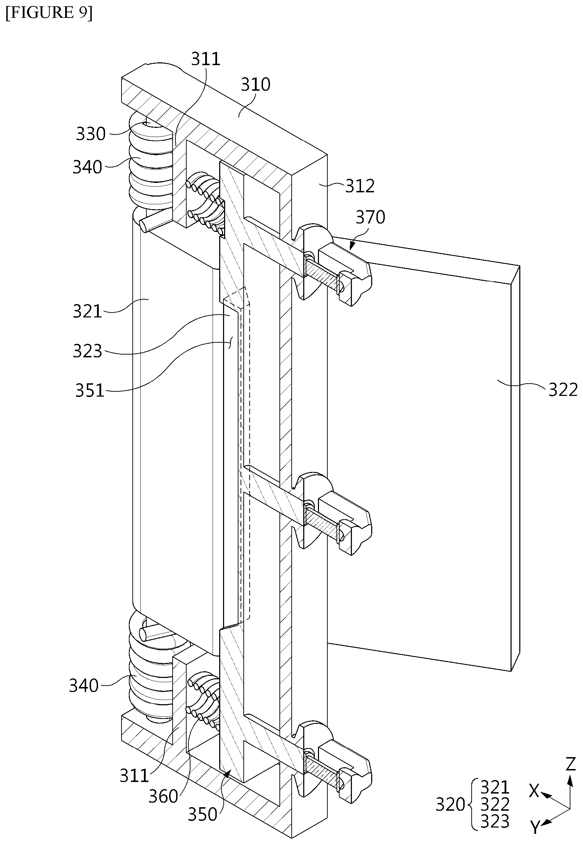

FIG. 9 is a cross-sectional view taken along the line B-B' of FIG. 5. Referring to FIG. 9, the second part 320 may include a protrusion 323. The protrusion 323 may protrude from the second hooking portion 321. The protrusion 323 may be formed on the second hooking portion 321. The locking portion 350 may include a fixing hole 351. The protrusion 323 may be inserted into the fixing hole 351. By inserting the protrusion 323 into the fixing hole 351, the locking portion 350 may fix the second part 320.

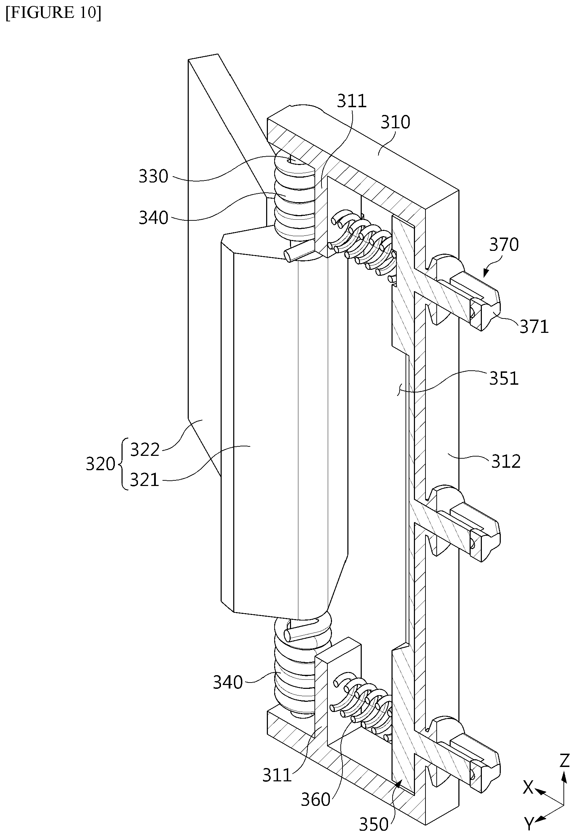

FIG. 10 is a drawing showing the change in FIG. 9 when an internal temperature of the battery container 1000 rises. Referring to FIG. 10, when the internal temperature of the battery container 1000 rises, the trigger member 370 may be damaged. The plurality of glass bulbs 372 may all be destroyed. In addition, the locking portion 350 may move backward or along the -X-axis direction by the elastic member 360. The protrusion 323 may be detached from the fixing hole 351. The second part 320 may rotate due to the restoring force of the second torsion spring 340.

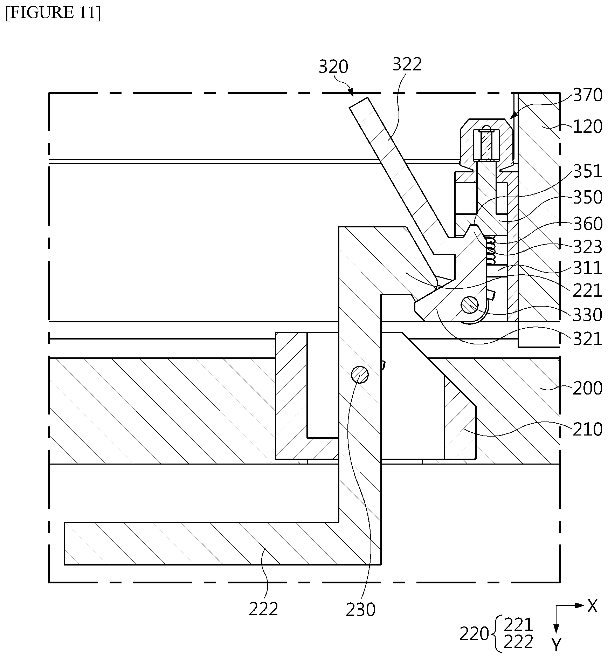

FIG. 11 is a cross-sectional view taken along the line A-A' of FIG. 1. Referring to FIG. 11, when the door 200 is closed, the first hooking portion 221 and the second hooking portion 321 may be engaged with each other. The first hooking portion 221 may be rotatably coupled with the first rotary shaft 230. The second hooking portion 321 may be rotatably coupled with the second rotary shaft 330.

The first torsion spring 240 may provide a restoring force to rotate the first hooking portion 221 or the first part 220 in a clockwise direction. The second torsion spring 340 may provide a restoring force to rotate the second hooking portion 321 or the second part 320 in a counterclockwise direction. The rotation direction in which the first torsion spring 240 provides the restoring force and the rotation direction in which the second torsion spring 340 provides the restoring force may be opposite to each other.

As the protrusion 323 is inserted into the fixing hole 351 and the trigger member 370 supports the locking portion 350, the second part 320 may maintain a fixed state.

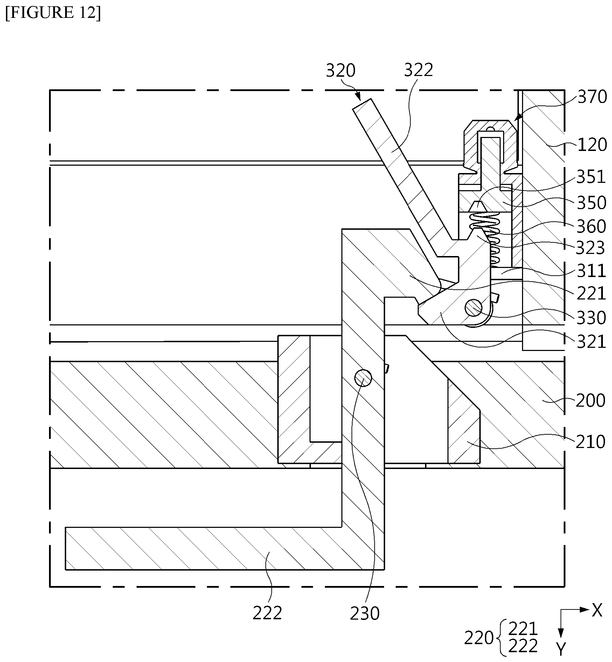

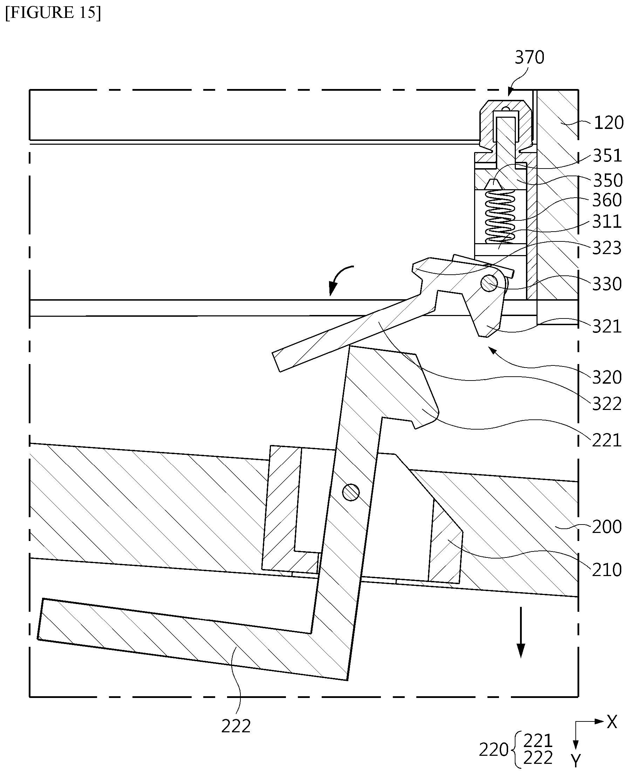

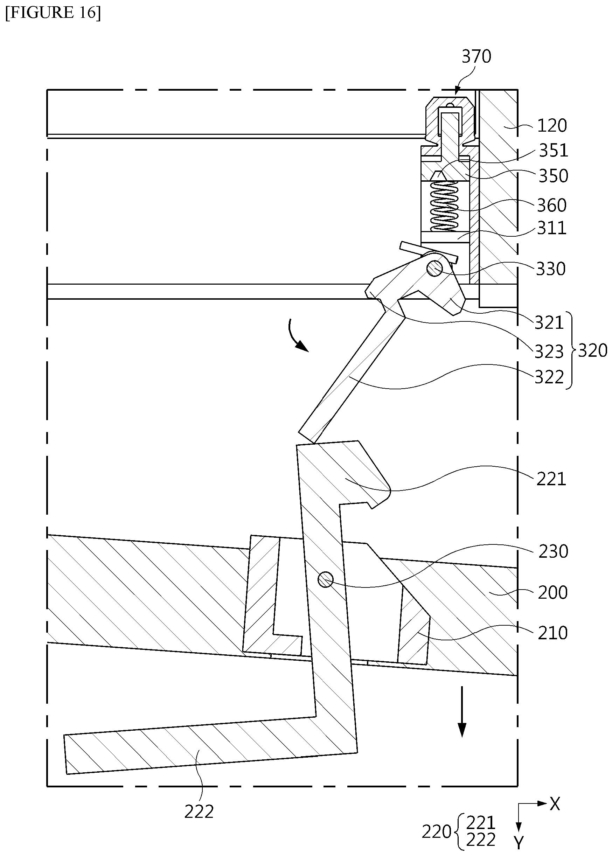

FIGS. 12 to 16 are drawings showing the change in FIG. 11 when an internal temperature of the battery container 1000 rises.

Referring to FIG. 12, the trigger member 370 may be damaged due to the increase in internal temperature of the battery container 1000. If all of the plurality of glass bulbs 372 are destroyed, the locking portion 350 may move backward or in the -X-axis direction by the elastic member 360. Also, the fixing hole 351 may be detached from the protrusion 323.

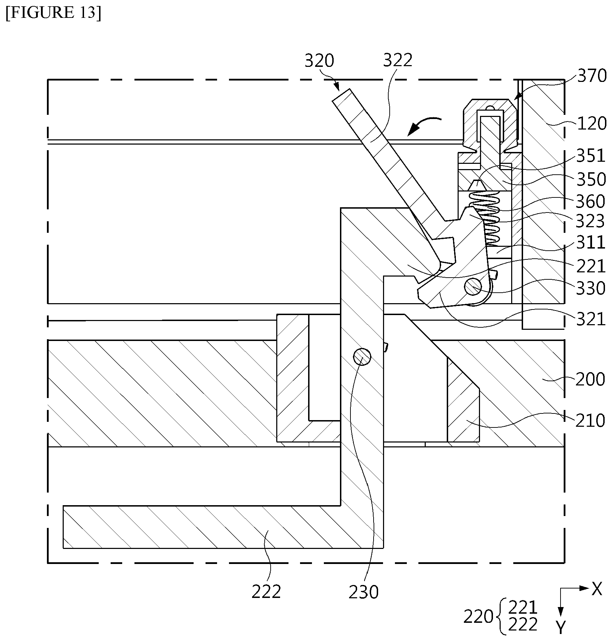

Referring to FIG. 13, the second part 320 may include an opener 322. The opener 322 may extend from the second hooking portion 321. The second part 320 may be formed integrally. When the coupling of the locking portion 350 and the second part 320 is released, the second part 320 may rotate in a counterclockwise direction about the second rotary shaft 330 by the second torsion spring 340. As the second part 320 rotates, the hocking of the first hooking portion 221 and the second hooking portion 321 may be released. As the second part 320 rotates, the opener 322 may contact the first hooking portion 221. As the second part 320 rotates, the opener 322 may push the first hooking portion 221 to cause the first part 220 to rotate in a clockwise direction.

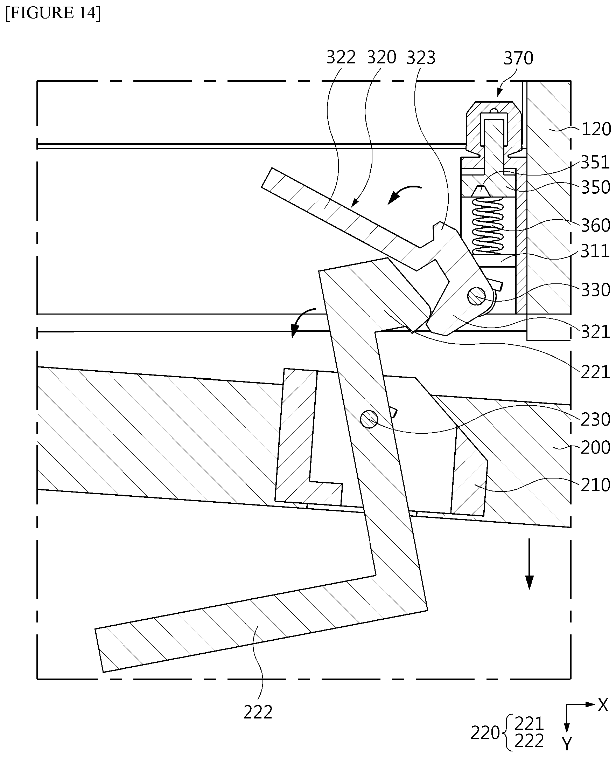

Referring to FIGS. 14 to 16, as the second part 320 rotates in a counterclockwise direction about the second rotary shaft 330, the opener 322 may push the first hooking portion 221. As the opener 322 pushes the first hooking portion 221, the door 200 may be opened. The door 200 may be opened by rotating in a clockwise direction. The opener 322 may open the door 200 until the second part 320 reaches the maximum angle at which the second part 320 may rotate in the counterclockwise direction.

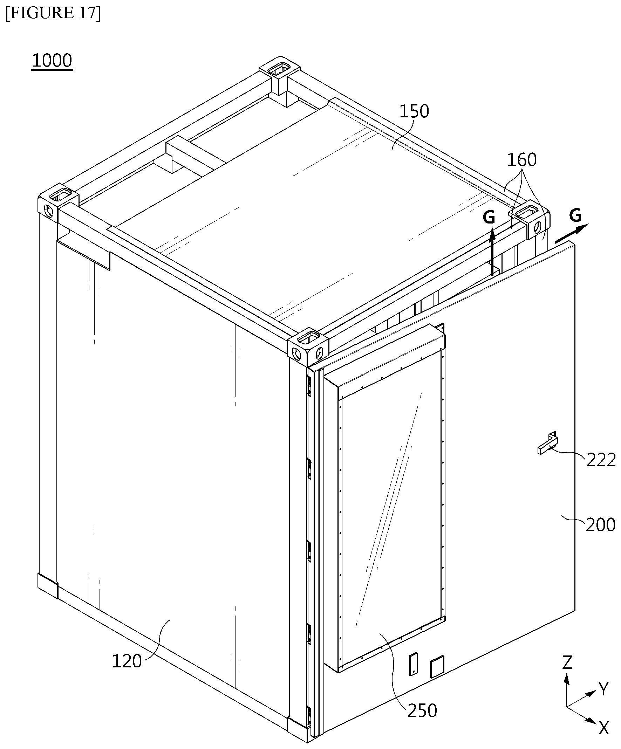

FIG. 17 is a drawing showing that the door 200 is opened when an internal temperature of the battery container 1000 rises. Referring to FIG. 17, when the internal temperature of the battery container 1000 rises, the door 200 may be opened by the locking assembly 300. Due to the opening of the door 200, the gas or the like inside the battery container 1000 may be discharged to the outside.

When the internal temperature of the battery container 1000 rises, the locking assembly 300 may open the door 200 without using power or electrical energy. The locking assembly 300 may improve the thermal safety of the battery container 1000.

The container system may include a plurality of battery containers 1000. The plurality of battery containers 1000 may be physically or electrically connected.

The container system may include a control module. The control module may be electrically connected to the plurality of battery containers 1000 included in the container system. The control module may control charging and discharging of the plurality of battery containers 1000. In addition, the control module may obtain state information of the plurality of battery containers 1000.

In addition, the container system may be configured to include an additional fire extinguishing module to control thermal events.

The energy storage system (ESS) according to the present disclosure may include a plurality of battery containers 1000 according to the present disclosure. The energy storage system may include a plurality of container systems. Also, the container system may include a plurality of battery containers 1000. The energy storage system may form a link group by combining a plurality of battery containers 1000 and a control module.

Meanwhile, the terms indicating directions as used herein such as upper, lower, left, right, front, and back are used for convenience of description only, and it is obvious to those skilled in the art that the term may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery container comprising:
a case providing a space therein and having a locking assembly;
a battery cell located within the case; and
a door coupled to the case and having a first hooking portion,
wherein the locking assembly includes:
a second hooking portion coupled to the first hooking portion;
a locking portion coupled to the second hooking portion and configured to fix the second hooking portion;
an elastic member configured to provide a restoring force to the locking portion; and
a trigger member configured to support the locking portion and restrict movement of the locking portion.

2. The battery container according to claim 1,
wherein the trigger member is configured to be damaged when a thermal event occurs.

3. The battery container according to claim 1,
wherein the trigger member includes a glass bulb.

4. The battery container according to claim 1,
wherein the trigger member includes a melting member.

5. The battery container according to claim 1,
wherein the trigger member is provided in plurality.

6. The battery container according to claim 1,
wherein the locking assembly further includes a protrusion formed on the second hooking portion, and
wherein the locking portion has a fixing hole into which the protrusion is inserted.

7. The battery container according to claim 6,
wherein the protrusion is separated from the fixing hole when the trigger member is damaged.

8. The battery container according to claim 1,
wherein the door includes a first rotary shaft rotatably coupled with the first hooking portion, and
wherein the locking assembly further includes a second rotary shaft rotatably coupled with the second hooking portion.

9. The battery container according to claim 8, further comprising:
a first torsion spring coupled to the first rotary shaft and configured to provide a restoring force to the first hooking portion; and
a second torsion spring coupled to the second rotary shaft and configured to provide a restoring force to the second hooking portion.

10. The battery container according to claim 9,
wherein a rotation direction in which the first torsion spring provides a restoring force and a rotation direction in which the second torsion spring provides a restoring force are opposite to each other.

11. The battery container according to claim 9,
wherein the locking assembly further includes an opener extending from the second hooking portion, and
wherein the opener pushes the first hooking portion as the second hooking portion rotates.

12. The battery container according to claim 1,
wherein the door further includes a handle extending from the first hooking portion.

13. A container system comprising the battery container according to any one of claims 1 to 12.

14. An energy storage system comprising the battery container according to any one of claims 1 to 12.
